Europäisches Patentamt

European Patent Office

Office européen des brevets

(11) Veröffentlichungsnummer: **0 305 709 B1**

## EUROPÄISCHE PATENTSCHRIFT

(45) Veröffentlichungstag der Patentschrift: **29.12.93**

(51) Int. Cl.⁵: **G06F 15/347**

(21) Anmeldenummer: **88111445.8**

(22) Anmeldetag: **15.07.88**

(54) **Matrix-Matrix-Multiplizierer.**

(30) Priorität: **01.09.87 DE 3729175**

(43) Veröffentlichungstag der Anmeldung:
**08.03.89 Patentblatt 89/10**

(45) Bekanntmachung des Hinweises auf die
Patenterteilung:
**29.12.93 Patentblatt 93/52**

(84) Benannte Vertragsstaaten:
**DE FR GB IT NL**

(56) Entgegenhaltungen:
**GB-A- 2 141 847**
**GB-A- 2 144 245**
**US-A- 4 697 247**

(73) Patentinhaber: **SIEMENS AKTIENGESELL-
SCHAFT**
**Wittelsbacherplatz 2**
**D-80333 München(DE)**

(72) Erfinder: **Künemund, Ronald, Dipl.-Ing.**
**Fasanenstrasse 28**
**D-8025 Unterhaching(DE)**
Erfinder: **Noll, Tobias, Dipl.-Ing.**
**Rudi-Ismayr-Strasse 9**
**D-8056 Neufahrn(DE)**

## Beschreibung

Die Erfindung bezieht sich auf eine Schaltung zur Multiplikation der Elemente einer Multiplikandenmatrix mit den Elementen einer Multiplikatormatrix nach den Oberbegriffen der Patentansprüche 1 und 2. Derartige Schaltungen sind beispielsweise durch GB-A-2 141 847 sowie GB-A-2 144 245 bekannt.

Der Erfindung liegt die Aufgabe zugrunde, eine Schaltung der vorstehend genannten Art anzugeben, die auf einem dotierten Halbleiterkörper flächensparend integriert werden kann. Das wird erfindungsgemäß durch eine Ausbildung der Schaltung nach den kennzeichnenden Teilen der Patentansprüche 1 oder 2 erreicht. Der mit der Erfindung erzielbare Vorteil liegt insbesondere darin, daß eine Mehrzahl von bitspezifischen Schaltungen oder doppelbitspezifischen Schaltungen, die zur Multiplikation der die Elemente der Multiplikandenmatrix darstellenden digitalen Signale mit den die Elemente der Multiplikatormatrix darstellenden digitalen Signalen dienen, sehr flächensparend implementiert werden können, so daß die gesamte Schaltung auf einer relativ kleinen Halbleiterfläche realisiert werden kann.

Die Erfindung wird anhand von bevorzugten, in der Zeichnung schematisch dargestellten Ausführungsbeispielen näher erläutert. Dabei zeigt:

Fig. 1      ein erstes Ausführungsbeispiel der Erfindung und

Fig. 2      ein zweites Ausführungsbeispiel.

Die Multiplikation der Elemente $X_{ij}$ einer Multiplikandenmatrix mit den Elementen $Y_{ij}$ einer Multiplikatormatrix läßt sich bei zwei Elementen pro Zeile und Spalte wie folgt darstellen:

$$\begin{bmatrix} X11 & X12 \\ X21 & X22 \end{bmatrix} \cdot \begin{bmatrix} Y11 & Y12 \\ Y21 & Y22 \end{bmatrix} = \begin{bmatrix} C11 & C12 \\ C21 & C22 \end{bmatrix} \qquad (1)$$

Dabei ergeben sich folgende Gleichungen für die Elemente $C_{ij}$ der Produktmatrix:

$$C11 = X11 \cdot Y11 + X12 \cdot Y21$$
$$C12 = X11 \cdot Y12 + X12 \cdot Y22$$
$$C21 = X21 \cdot Y11 + X22 \cdot Y21$$
$$C22 = X21 \cdot Y12 + X22 \cdot Y22 \qquad (2)$$

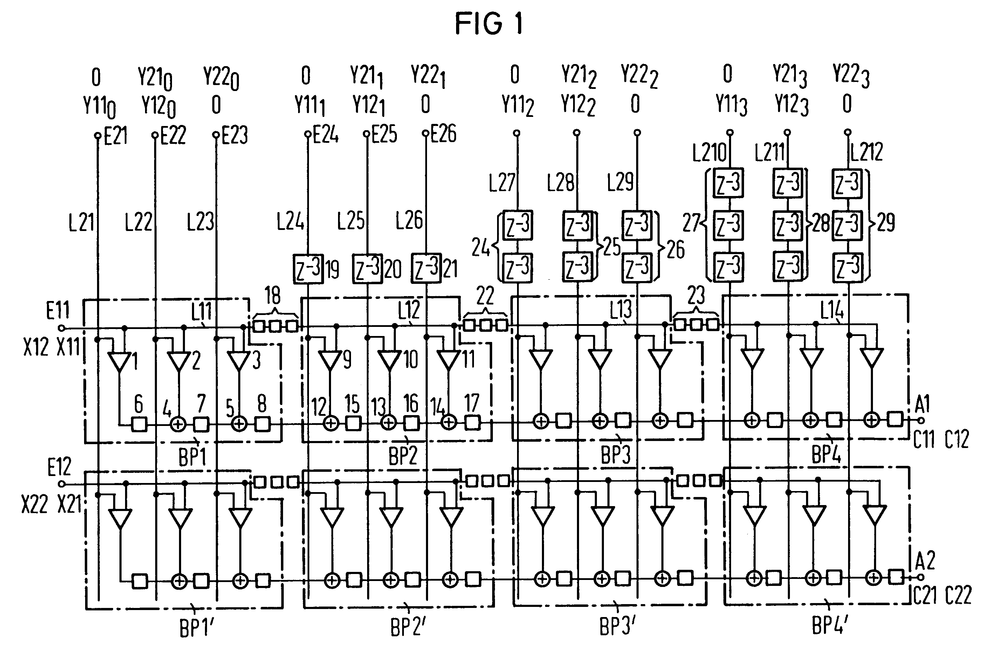

Die in Figur 1 dargestellte Schaltung zur Durchführung dieser Matrix-Matrix-Multiplikation weist eine erste Multiplikandenleitung mit mehreren Abschnitten L11 bis L14 auf, deren Eingang E11 digitale Signale zugeführt werden, die die Elemente X11 und X12 der ersten Zeile der X-Matrix darstellen. Die Zuführung dieser Signale erfolgt mit einer Abtastrate von 1/T. L11 ist mit einer ersten bitspezifischen Schaltung BP1 verbunden. Diese besteht aus drei Multiplikatorleitungen L21 bis L23, deren Eingängen E21 bis E23 in einer noch näher zu beschreibenden Weise die niedrigstwertigen Bits $Y_{ij0}$ der Signale zugeführt werden, die die Elemente der Y-Matrix darstellen. Jede der Leitungen L21 bis L23 ist mit den zweiten Eingängen von Partialproduktstufen 1 bis 3 beschaltet, deren erste Eingänge mit L11 verbunden sind. Außerdem enthält BP1 eine Kettenschaltung aus Addierern 4 und 5 und Verzögerungsgliedern 6, 7 und 8, die alternierend mit den Addierern 4 und 5 in die Kette eingeschaltet sind. Der Ausgang der Partialproduktstufe 1 ist über das Verzögerungsglied 6 an den einen Eingang des Addierers 4 geschaltet, dessen anderer Eingang mit dem Ausgang der Partialproduktstufe 2 verbunden ist. Der Ausgang von 4 ist über das Verzögerungsglied 7 mit dem ersten Eingang des Addierers 5 beschaltet, dessen anderer Eingang mit dem Ausgang der Partialproduktstufe 3 verbunden ist. Der Ausgang des dem Addierer 5 nachgeschalteten Verzögerungsgliedes 8 stellt den Ausgang der Kettenschaltung von BP1 dar.

Der zweite Abschnitt L12 der ersten Multiplikandenleitung ist in analoger Weise mit einer entsprechend aufgebauten, bitspezifischen Schaltung BP2 verbunden, die drei Multiplikatorleitungen L24 bis L26, drei Partialproduktstufen 9 bis 11 und eine Kettenschaltung, bestehend aus den Addierern 12 bis 14 und den mit diesen alternierenden Verzögerungsgliedern 15 bis 17, enthält. Dabei ist der Abschnitt L12 über eine Verzögerungskette 18 mit dem Abschnitt L11 verbunden, welche die Verzögerung, die durch die Glieder 6, 7 und 8 von BP1 gegeben ist, nachbildet. Damit sind die über E11 zugeführten und am Ausgang von 18 abgegriffenen Signale mit den am Ausgang des Verzögerungsgliedes 8 auftretenden Zwischenergebnissen synchronisiert. Den Leitungen L24 bis L26 werden über ihre Eingänge E24 bis E26 die Bits $Y_{ij1}$ der zweitniedrigsten Wertigkeit zugeführt. Die Kettenschaltung 12, 15, 13, 16, 14 und 17 von BP2 ist mit dem Ausgang der Kettenschaltung von BP1 direkt verbunden. In die Leitungen L24 bis L26 von BP2 sind Verzögerungsglieder 19 bis 21 eingefügt, die die Verzögerung der Verzögerungskette 18 nachbilden.

Der Abschnitt L13 der Multiplikandenleitung ist über eine Verzögerungskette 22 mit L12 verbunden, der Abschnitt L14 über eine weitere Verzögerungskette 23 mit L13. Die mit L13 in Verbindung stehende bitspezifische Schaltung BP3 und die mit L14 verbundene Schaltung BP4 sind entsprechend BP2 aufgebaut. Dabei sind die Multiplikatorleitungen L27 bis L29 mit den Signalbits $Yij_2$ der Wertigkeit $2^2$ und die Leitungen L210 bis L212 mit den Signalbits $Yij_3$ der höchsten Wertigkeit $2^3$ belegt. In L27 bis L29 sind Verzögerungsglieder 24, 25 und 26 eingefügt, die die Verzögerungen der Verzögerungsketten 18 und 22 nachbilden, während in L210 bis L212 Verzögerungsglieder 27 bis 29 eingeschaltet sind, die die Verzögerungen der Ketten 18, 22 und 23 nachbilden. Die Kettenschaltung von BP3 ist an den Ausgang der Kettenschaltung von BP2 angeschlossen, die Kettenschaltung von BP4 an den Ausgang der Kettenschaltung von BP3. Am Ausgang A1 der Kettenschaltung von BP4 sind dann digitale Signale abgreifbar, die den Elementen C11 und C12 der ersten Zeile der Produktmatrix entsprechen.

Im unteren Teil von Figur 1 ist eine weitere Teilschaltung vorgesehen, die einen Eingang E12 und einen Ausgang A2 aufweist. Zwischen diesen beiden Anschlüssen ist sie ebenso ausgebildet wie die bisher beschriebene, erste Teilschaltung zwischen den Anschlüssen E11 und A1. Die mit E12 verbundene Leitung ist als eine zweite Multiplikandenleitung zu bezeichnen, deren vier durch Verzögerungsketten voneinander getrennte Abschnitte jeweils mit bitspezifischen Schaltungen BP1' bis BP4' verbunden sind. Dabei sind allerdings die Multiplikatorleitungen L21 bis L212 ohne Zwischenschaltung weiterer Verzögerungsglieder soweit verlängert, daß sie auch die Schaltungen BP1' bis BP4' durchlaufen. Die Verzögerungsglieder 19 bis 21, 24 bis 26 und 27 bis 29 sind also den Schaltungen BP2 und BP2', BP3 und BP3' und den Schaltungen BP4 und BP4' gemeinsam zugeordnet. E12 werden die Signale X21 und X22 zugeführt, die die Elemente der zweiten Zeile der X-Matrix darstellen, wobei an A2 die Signale C21 und C22 abgreifbar sind, die die Elemente der zweiten Zeile der Produktmatrix darstellen.

In Betrieb liegen während einer Abtastperiode $T_n$ an den Eingängen E11 und E12 jeweils die Signale X11 und X21 an. Außerdem liegen während der Abtastperiode $T_n$ an den Leitungen L21 bis L23 jeweils die Signale $Y11_0$, $Y12_0$ und "0", an den Leitungen L24 bis L26 jeweils die Signale $Y11_1$, $Y12_1$ und "0", an den Leitungen L27 bis L29 jeweils die Signale $Y11_2$, $Y12_2$ und "0" und an den Leitungen L210 bis L212 die Signale $Y11_3$, $Y12_3$ und "0" an. Während der darauffolgenden Abtastperiode $T_{n+1}$ liegen an E11 und E12 jeweils die Signale X12 und X22 an, während die Leitungen L21 bis L23 mit "0", $Y21_0$ und $Y22_0$, die Leitungen L24 bis L26 mit "0", $Y21_1$ und $Y22_1$, die Leitungen L27 bis L29 mit "0", $Y21_2$ und $Y22_2$ und die Leitungen L210 bis L212 mit "0", $Y21_3$ und $Y22_3$ belegt sind. An A1 und A2 treten dann innerhalb einer späteren Abtastperiode jeweils die Signale C12 und C22 und innerhalb der darauffolgnden Abtastperiode jeweils die Signale C11 und C21 auf.

Wenn die Signale Xij, die bei E11 und E12 zugeführt werden, eine Wortbreite von n Bit aufweisen, bestehen die Eingänge E11 und E12 jeweils aus n Anschlüssen. Die mit diesen verbundenen Multiplikandenleitungen weisen dann jeweils n Leitungen auf, die zur bitparallelen Übertragung der Signale Xij dienen. Jede der Partialproduktstufen, z.B. 1, ist dabei als eine zeilenförmige Anordnung von n Gattern, z.B. UND-Gattern, ausgebildet, während die Addierer, z.B. 4, jeweils aus einer zeilenförmigen Anordnung von Volladdierern bestehen, die jeweils zur bitparallelen Addition von zwei n-stelligen Eingangssignalen erforderlich sind. Als besonders vorteilhaft erweist sich der Einsatz von Carry-Save-Addiererstufen oder Carry-Ripple-Addiererstufen mit zusätzlichem Pipelining in der Übertragungsrichtung der Carry-Signale.

In Figur 1 sind sämtliche Verzögerungsglieder, z.B. 6, 7, 8, der Kettenschaltungen in den bitspezifischen Schaltungen sowie die einzelnen Stufen der Verzögerungsketten, z.B. 18, 22 und 23, als getaktete Schieberegisterstufen mit Master-Slave-Aufbau ausgebildet, wobei jedes einzelne Verzögerungsglied bzw. jede einzelne dieser Stufen eine Verzögerung von einer Abtastperiode bewirkt. Die Verzögerungsglieder 19 bis 21, 24 bis 26 und 27 bis 29 sind ebenfalls aus solchen Schieberegisterstufen aufgebaut, wobei die in die Blöcke eingetragenen Symbole $z^{-3}$ jeweils Verzögerungszeiten von drei Abtastperioden kennzeichnen.

Die Anzahl der einer bitspezifischen Schaltung, z.B. BP1, zugeordneten Multiplikatorleitungen, z.B. L21 bis L23, entspricht ganz allgemein der Anzahl m der Zeilenelemente der Y-Matrix, vergrößert um die um 1 verringerte Anzahl dieser Zeilen der Matrix. Dabei werden in der Abtastperiode $T_n$ die Signale, die die Zeilenelemente der ersten Zeile der Y-Matrix darstellen, den ersten m Multiplikatorleitungen einer bitspezifischen Schaltung, beginnend mit der in Figur 1 am weitesten links liegenden Leitung, zugeführt, wobei die mit diesen Signalen nicht mehr belegten Leitungen mit einer 0 belegt werden. In der nächsten Abtastperiode $T_{n+1}$ werden die Signale, die die Elemente der zweiten Zeile der Y-Matrix darstellen, um jeweils eine Leitung nach rechts versetzt angelegt, wobei wieder die hierbei nicht belegten Leitungen jeweils mit einer "0" beschaltet werden. Während der folgenden Abtastperiode werden dann die Signale, die die Elemte der dritten Zeile der Y-Matrix darstellen, um jeweils eine weitere Leitung nach rechts versetzt an die Multiplikatorleitungen angelegt, wobei wieder die hierdurch nicht belegten Leitungen mit einer "0" belegt werden, usw..

Die Anzahl der Abschnitte der Multiplikandenleitungen und die Anzahl der bitspezifischen Schaltungen entspricht ganz allgemein der Wortbreite der Yij-Signale. Ist die Wortbreite p dieser Signale größer als 4, so vergrößert sich die Zahl der in Fig. 1 dargestellten Abschnitte auf L1p und die Zahl der bitspezifischen Schaltungen auf BPp. Weiterhin entspricht die Zahl der Multiplikandenleitungen der Zeilenzahl der X-Matrix, wobei dem Eingang einer jeden Multiplikandenleitung die Signale zugeführt werden, die den Elementen der dieser Leitung zugeordneten Matrixzeile entsprechen.

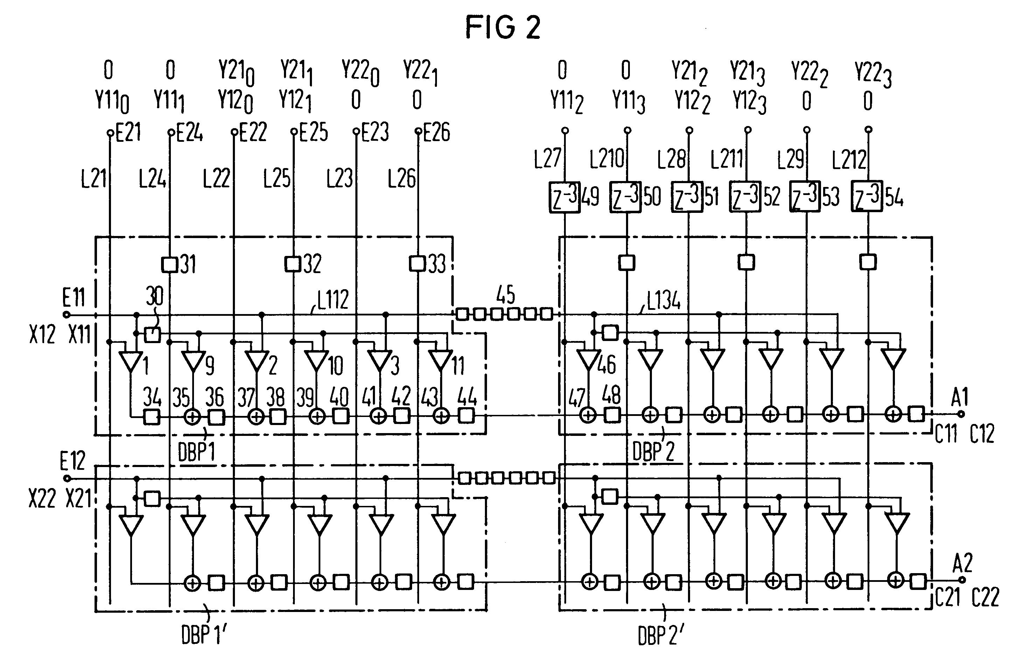

Das in Figur 2 dargestellte Ausführungsbeispiel unterscheidet sich von Fig. 1 dadurch, daß die bitspezifischen Schaltungen BP1 und BP2 zu einer doppelbitspezifischen Schaltung DBP1 zusammengefaßt sind. Ebenso sind BP3 und BP4 zu einer doppelbitspezifischen Schaltung DBP2 zusammengefaßt. Dabei sind die Leitungen L21, L24, L22, L25, L23 und L26 in dieser Reihenfolge nebeneinander angeordnet. Die Partialproduktstufen 1, 9, 2, 10, 3 und 11 sind ebenfalls in dieser Reihenfolge neben den zugehörigen Multiplikatorleitungen vorgesehen. Dabei sind die ersten Eingänge der Partialproduktstufen 1, 2 und 3 sowie bisher direkt an den Abschnitt L112 der ersten Multiplikandenleitung gelegt, die ersten Eingänge der Partialproduktstufen 9, 10 und 11 jedoch über eine Verzögerungsstufe 30. Die zweiten Eingänge von 1, 9, 2, 10, 3 und 11 sind jeweils mit den zugeordneten Multiplikatorleitungen L21 bis L26 verbunden, wobei in die Leitungen L24, L25 und L26 Verzögerungsstufen 31, 32 und 33 eingefügt sind. Der Ausgang der Partialproduktstufe 1 ist über eine Verzögerungsstufe 34 an den einen Eingang des Addierers 35 gelegt, dessen anderer Eingang mit dem Ausgang der Partialproduktstufe 9 verbunden ist. Der Ausgang von 35 ist über eine Verzögerungsstufe 36 mit dem einen Eingang eines Addierers 37 beschaltet, dessen anderer Eingang mit dem Ausgang von 2 in Verbindung steht. Der Ausgang von 37 ist über eine Verzögerungsstufe 38 mit einem Addierer 39 verbunden, dessen anderer Eingang mit dem Ausgang von 10 beschaltet ist. Der Ausgang von 39 ist seinerseits über eine Verzögerungsstufe 40 mit dem einen Eingang eines Addierers 41 beschaltet, dessen anderer Eingang mit dem Ausgang von 3 verbunden ist. Der Ausgang von 41 ist über eine Verzögerungsstufe 42 an den ersten Eingang eines Addierers 43 gelegt, dessen anderer Eingang mit dem Ausgang von 11 beschaltet ist. Der Ausgang einer dem Ausgang von 43 nachgeschalteten Verzögerungsstufe 44 stellt den Ausgang einer Kettenschaltung von DBP1 dar, die aus den Addierern 35, 37, 39, 41 und 43 und den Verzögerungsstufen 34, 36, 38, 40, 42 und 44 besteht.

Ein zweiter Abschnitt L134 der ersten Multiplikandenleitung, der durch eine Verzögerungskette 45 von L112 getrennt ist, ist mit einer doppelbitspezifischen Schaltung DBP2 verbunden, die analog zu DBP1 aufgebaut ist. Lediglich der Ausgang der ersten Partialproduktstufe 46 von DBP2 ist in Abweichung hiervon an den Eingang eines Addierers 47 gelegt, dessen Ausgang dann mit der ersten Verzögerungsstufe 48 der Kettenschaltung von DBP2 verbunden ist. Ebenso könnte aber auch der Ausgang von 1 an den Eingang eines Addierers gelegt sein, dessen anderer Eingang mit einer "0" beschaltet wäre und dessen Ausgang dann am Eingang von 34 liegen würde, ohne daß die Funktion von DBP1 verändert werden würde. In die Multiplikatorleitungen L27 bis L212 sind Verzögerungsstufen 49 bis 54 eingefügt, die die Verzögerung der Kette 45 nachbilden. Am Ausgang A1 der Kettenschaltung von DBP2 sind wieder die Signale abgreifbar, die der ersten Zeile der Produktmatrix entsprechen.

Zwischen E12 und A2 befindet sich in Figur 2 eine weitere Teilschaltung, die der zwischen den Anschlüssen E11 und A1 angeordneten Teilschaltung vollständig entspricht. E12 werden wieder die Signale zugeführt, die den Elementen der zweiten Zeile der X-Matrix entsprechen, wobei an A2 die Signale abgegriffen werden, die den Elementen der zweiten Zeile der Produktmatrix entsprechen. Die doppelbitspezifischen Schaltungen der unteren Teilschaltung sind mit DBP1′ und DBP2′ bezeichnet. Die Multiplikatorleitungen L21 bis L212 sind in Fig. 2 mit denselben Signalen belegt wie in Fig. 1.

Die in Fig. 2 dargestellten Verzögerungsstufen, z.B. 30, 31 bis 33, 34, 36, 48 usw. sind vorzugsweise als Registerhalbstufen, z.B. als D-Flipflops, ausgebildet und bewirken jeweils eine Verzögerung, die einer halben Abtastperiode der bei E11 und E12 zugeführten Signale entspricht. Die Verzögerungsstufen 49 bis 54 bewirken jeweils eine Verzögerung um drei Abtastperioden. Durch die Ausbildung der Verzögerungsstufen als Registerhalbstufen kann die Schaltung nach Fig. 2 auf einer wesentlich kleineren Halbleiterfläche realisiert werden als die Schaltung nach Fig. 1.

**Patentansprüche**

1.  Schaltung zur Multiplikation der durch digitale Signale dargestellten Elemente einer Multiplikandenmatrix mit den durch digitale Signale dargestellten Elementen einer Multiplikatormatrix, **dadurch gekennzeichnet,** daß eine erste Multiplikandenleitung mit mehreren Abschnitten (L11...L14) vorgesehen ist, deren Eingang (E11) die digitalen Signale, welche die Elemente der ersten Zeile der Multiplikandenmatrix darstellen, mit einer vorgegebenen Abtastrate zugeführt werden, daß der erste Abschnitt (L11) der

4

ersten Multiplikandenleitung mit einer den niedrigstwertigen Bits der Elemente der Multiplikatormatrix zugeordneten, ersten bitspezifischen Schaltung (BP1) verbunden ist, bestehend aus einer Anzahl von mit diesen Bits beaufschlagten Multiplikatorleitungen (L21...L23), die der Anzahl der Elemente einer Matrixzeile der Multiplikatormatrix, erhöht um die um 1 verringerte Anzahl der Zeilen dieser Matrix, entspricht, aus diesen Multiplikatorleitungen (L21...L23) individuell zugeordneten Partialproduktstufen (1, 2, 3), deren ersten Eingänge mit dem ersten Abschnitt (L11) der ersten Multiplikandenleitung und deren zweite Eingänge jeweils mit den Multiplikatorleitungen (L21...L23) verbunden sind, und aus einer ersten Kettenschaltung von Addierern (4, 5) mit jeweils zwischengeschalteten Verzögerungsgliedern (6...8), wobei die Ausgänge der Partialproduktstufen an die freien Eingänge der Addierer (4, 5) geschaltet sind, daß jeder weitere Abschnitt (L12) der ersten Multiplikandenleitung mit einer weiteren, entsprechend aufgebauten, bitspezifischen Schaltung (BP2) verbunden ist, die jeweils einem höherwertigen Bit der Elemente der Multiplikatormatrix zugeordnet ist, wobei jeder weitere Abschnitt (L12) der ersten Multiplikandenleitung über eine Verzögerungskette (18) mit dem jeweils vorhergehenden Abschnitt (L11) verbunden ist, die die Verzögerung, welche durch die Kettenschaltung der mit dem vorhergehenden Abschnitt (L11) verbundenen bitspezifischen Schaltung (BP1) gegeben ist, nachbildet, wobei in die Multiplikatorleitungen (L24...L26) jeder weiteren bitspezifischen Schaltung (BP2) Verzögerungsglieder (19...21) eingefügt sind, deren Verzögerung der Summe aller vor dem zugeordneten und allen vorhergehenden Abschnitten (L12, L11) der ersten Multiplikandenleitung eingefügten Verzögerungen (18) gleichkommt, und wobei die zu jeder weiteren bitspezifischen Schaltung (BP2) gehörende, weitere Kettenschaltung von Addierern (12...14) mit jeweils zwischengeschalteten Verzögerungsgliedern (15...17) an den Ausgang der entsprechenden Kettenschaltung der unmittelbar vorhergehenden bitspezifischen Schaltung (BP1) angeschlossen ist, daß an dem Ausgang (A1) der Kettenschaltung der den höchstwertigen Bits der Elemente der Multiplikatormatrix zugeordneten, bitspezifischen Schaltung (BP4) erste ausgangsseitige digitale Signale abgreifbar sind, die die Elemente der ersten Zeile der Produktmatrix darstellen, daß weitere, jeweils den weiteren Zeilen der Multiplikandenmatrix zugeordnete Multiplikandenleitungen mit mehreren Abschnitten vorgesehen sind, deren Eingängen (E12) digitale Signale, welche die Elemente der weiteren Zeilen der Multiplikandenmatrix darstellen, mit der genannten Abtastrate zugeführt werden, daß die einzelnen Abschnitte jeder weiteren Multiplikandenleitung mit in gleicher Weise ausgebildeten bitspezifischen Schaltungen (BP1'...BP4') verbunden sind, wie die entsprechenden Abschnitte (L11...L14) der ersten Multiplikandenleitung, daß an den Ausgängen (A2) der Kettenschaltungen der den höchstwertigen Bits der Elemente der Multiplikatormatrix zugeordneten, bitspezifischen Schaltungen (BP4'), die mit den letzten Abschnitten der weiteren Multiplikandenleitungen verbunden sind, jeweils weitere ausgangsseitige digitale Signale abgreifbar sind, die die Elemente der weiteren Zeilen der Produktmatrix darstellen, und daß die zwischen die Addierer (4, 5, 12, 13, 14) der einzelnen Kettenschaltungen geschalteten Verzögerungsglieder (6, 7, 8, 15, 16, 17) jeweils Verzögerungen aufweisen, die einer Taktperiode der den Eingängen (E11, E12) der Multiplikandenleitungen zugeführten digitalen Signale entsprechen.

2. Schaltung zur Multiplikation der durch digitale Signale dargestellten Elemente einer Multiplikandenmatrix mit den durch digitale Signale dargestellten Elementen einer Multiplikatormatrix, **dadurch gekennzeichnet,** daß eine erste Multiplikandenleitung mit mehreren Abschnitten (L112, L134) vorgesehen ist, deren Eingang (E11) die digitalen Signale, welche die Elemente der ersten Zeile der Multiplikandenmatrix darstellen, mit einer vorgegebenen Abtastrate zugeführt werden, daß der erste Abschnitt (L112) der ersten Multiplikandenleitung mit einer den Bits der niedrigsten und zweitniedrigsten Wertigkeit der Elemente der Multiplikatormatrix zugeordneten, ersten doppelbitspezifischen Schaltung (DBP1) verbunden ist, bestehend aus einer Anzahl von mit diesen Bits der niedrigsten und zweitniedrigsten Wertigkeit beaufschlagten Multiplikatorleitungen (L21...L26), die der doppelten Anzahl der Elemente einer Matrixzeile der Multiplikatormatrix, erhöht um die um 2 verringerte, doppelte Anzahl der Zeilen dieser Matrix entspricht, aus diesen Multiplikatorleitungen (L21... L26) individuell zugeordneten Partialproduktstufen (1, 9, 2, 10, 3, 11), wobei die ersten Eingänge der den Bits der niedrigsten Wertigkeit zugeordneten Partialproduktstufen (1, 2, 3) direkt an den ersten Abschnitt (L112) der ersten Multiplikandenleitung und die zweiten Eingänge dieser Stufen direkt an die zugeordneten Multiplikatorleitungen (L21, L22, L23) geschaltet sind und wobei weiterhin die ersten Eingänge der den Bits der zweitniedrigsten Wertigkeit zugeordneten Partialproduktstufen (9, 10, 11) über eine Verzögerungsstufe (30) an den ersten Abschnitt (L112) der ersten Multiplikandenleitung und die zweiten Eingänge dieser letztgenannten Stufen jeweils über eine weitere Verzögerungsstufe (31, 32, 33) an die zugeordneten Multiplikatorleitungen (L24, L25, L26) geschaltet sind, und aus einer ersten Kettenschaltung von Addierern (35, 37, 39, 41, 43) mit jeweils zwischengeschalteten Verzögerungsgliedern (34, 36, 38, 40, 42, 44), wobei die Ausgänge der

EP 0 305 709 B1

Partialproduktstufen (1, 9, 2, 10, 3, 11) an die freien Eingänge der Addierer (35, 37, 39, 41, 43) geschaltet sind, daß jeder weitere Abschnitt (L134) der ersten Multiplikandenleitung mit einer weiteren, entsprechend aufgebauten, doppelbitspezifischen Schaltung (DBP2) verbunden ist, die jeweils zwei höherwertigen Bits der Elemente der Multiplikatormatrix zugeordnet ist, wobei jeder weitere Abschnitt (L134) der ersten Multiplikandenleitung über eine Verzögerungskette (45) mit dem jeweils vorhergehenden Abschnitt (L112) verbunden ist, die die Verzögerung, welche durch die Kettenschaltung der mit dem vorhergehenden Abschnitt (L112) verbundenen, doppelbitspezifischen Schaltung (DBP1) gegeben ist, nachbildet, wobei in die Multiplikatorleitungen (L27...L212) jeder weiteren doppelbitspezifischen Schaltung (DBP2) Verzögerungsstufen (49...54) eingefügt sind, deren Verzögerung der Summe aller vor dem zugeordneten (L134) und allen vorhergehenden Abschnitten (L112) der ersten Multiplikandenleitung eingefügten Verzögerungen (45) gleichkommt, und wobei die zu jeder weiteren doppelbitspezifischen Schaltung (DBP2) gehörende, weitere Kettenschaltung von Addierern (47...) mit jeweils zwischengeschalteten Verzögerungsgliedern (48...) an den Ausgang der entsprechenden Kettenschaltung der unmittelbar vorhergehenden doppelbitspezifischen Schaltung (DBP1) angeschlossen ist, daß an dem Ausgang (A1) der Kettenschaltung der den beiden höchstwertigen Bits der Elemente der Multiplikatormatrix zugeordneten, doppelbitspezifischen Schaltung erste ausgangsseitige digitale Signale abgreifbar sind, die die Elemente der ersten Zeile der Produktmatrix darstellen, daß weitere, jeweils den weiteren Zeilen der Multiplikandenmatrix zugeordnete Multiplikandenleitungen mit mehreren Abschnitten vorgesehen sind, deren Eingängen (E12) digitale Signale, welche die Elemente der weiteren Zeilen der Multiplikandenmatrix darstellen, mit der genannten Abtastrate zugeführt werden, daß die einzelnen Abschnitte jeder weiteren Multiplikandenleitung mit in gleicher Weise ausgebildeten doppelbitspezifischen Schaltungen (DBP1', DBP2') verbunden sind wie die entsprechenden Abschnitte der ersten Multiplikandenleitung, daß an den Ausgängen (A2) der Kettenschaltungen der den beiden höchstwertigen Bits der Elemente der Multiplikatormatrix zugeordneten, doppelbitspezifischen Schaltungen, die mit den letzten Abschnitten der weiteren Multiplikandenleitungen verbunden sind, jeweils weitere ausgangsseitige digitale Signale abgreifbar sind, die die Elemente der weiteren Zeilen der Produktmatrix darstellen, und daß die zwischen die Addierer (35, 37, 39, 41, 43, 47...) der einzelnen Kettenschaltungen geschalteten Verzögerungsstufen (34, 36, 38, 40, 42, 44, 48) und die den Eingängen der Partialproduktstufen (9, 10, 11) vorgeschalteten Verzögerungsstufen (30, 31, 32, 33) jeweils eine Verzögerung aufweisen, die einer halben Taktperiode der den Eingängen der Multiplikandenleitungen zugeführten digitalen Signale entspricht.

**Claims**

1. Circuit for multiplying the elements of a multiplicand matrix represented by digital signals by the elements of a multiplier matrix represented by digital signals, characterized in that a first multiplicand line having a plurality of sections (L11...L14) is provided, to the input (E11) of which the digital signals representing the elements of the first row of the multiplicand matrix are supplied at a prescribed sampling rate, in that the first section (L11) of the first multiplicand line is connected to a first bit-specific circuit (BP1) assigned to the least significant bits of the elements of the multiplier matrix, said circuit being composed of a number of multiplier lines (L21...L23), to which said bits are applied, corresponding to the number of elements of a matrix row of the multiplier matrix incremented by the number of rows of said matrix minus 1, of partial product stages (1, 2, 3) individually assigned to said multiplier lines (L21...L23), the first inputs of said stages being connected to the first section (L11) of the first multiplicand line and the second inputs thereof being connected in each case to the multiplier lines (L21...L23), and of a first chain circuit of adders (4, 5) with interposed delay elements (6...8) in each case, the outputs of the partial product stages being connected to the free inputs of the adders (4, 5), in that each further section (L12) of the first multiplicand line is connected to a further, correspondingly constructed, bit-specific circuit (BP2) assigned to a more significant bit of the elements of the multiplier matrix in each case, in which each further section (L12) of the first multiplicand line is connected via a delay chain (18) to the respective preceding section (L11) which simulates the delay caused by the chain circuit of the bit-specific circuit (BP1) connected to the preceding section (L11), in which delay elements (19...21) are inserted into the multiplier lines (L24...L26) of each further bit-specific circuit (BP2), the delay of which elements equals the sum of all the delays (18) inserted before the assigned and all preceding sections (L12, L11) of the first multiplicand line, and in which the further chain circuit of adders (12...14) belonging to each further bit-specific circuit (BP2) is connected, with interposed delay elements (15...17) in each case, to the output of the corresponding chain circuit of the immediately preceding bit-specific circuit (BP1), in that first output-side digital signals representing the

6

elements of the first row of the product matrix can be picked up at the output (A1) of the chain circuit of the bit-specific circuit (BP4) assigned to the most significant bits of the elements of the multiplier matrix, in that further multiplicand lines which have a plurality of sections and are assigned to the further rows of the multiplicand matrix in each case are provided, to the inputs (E12) of which digital signals representing the elements of the further rows of the multiplicand matrix are supplied with the aforesaid sampling rate, in that the individual sections of each further multiplicand line are connected to bit-specific circuits (BP1'...BP4') constructed in the same manner as the corresponding sections (L11...L14) of the first multiplicand line, in that in each case further output-side digital signals representing the elements of the further rows of the product matrix can be picked up at the outputs (A2) of the chain circuits of the bit-specific circuits (BP4') which are assigned to the most significant bits of the elements of the multiplier matrix and are connected to the last sections of the further multiplicand lines, and in that the delay elements (6, 7, 8, 15, 16, 17) connected between the adders (4, 5, 12, 13, 14) of the individual chain circuits have in each case delays that correspond to one clock period of the digital signals supplied to the inputs (E11, E12) of the multiplicand lines.

2. Circuit for multiplying the elements of a multiplicand matrix represented by digital signals by the elements of a multiplier matrix represented by digital signals, characterized in that a first multiplicand line having a plurality of sections (L112, L134) is provided, to the input (E11) of which the digital signals representing the elements of the first row of the multiplicand matrix are supplied at a prescribed sampling rate, in that the first section (L112) of the first multiplicand line is connected to a first double-bit-specific circuit (DBP1) assigned to the bits of the lowest and second lowest significance of the elements of the multiplier matrix, said circuit being composed of a number of multiplier lines (L21...L26), to which said bits of the lowest and second lowest significance are applied, corresponding to twice the number of elements of a matrix row of the multiplier matrix incremented by twice the number of rows of said matrix minus 2, of partial product stages (1, 9, 2, 10, 3, 11) individually assigned to said multiplier lines (L21...L26), the first inputs of the partial product stages (1, 2, 3) assigned to the bits of the lowest significance being connected directly to the first section (L112) of the first multiplicand line and the second inputs of said stages being connected directly to the assigned multiplier lines (L21, L22, L23), and furthermore the first inputs of the partial product stages (9, 10, 11) assigned to the bits of the second lowest significance being connected to the first section (L112) of the first multiplicand line via a delay stage (30) and the second inputs of these aforementioned stages being connected to the assigned multiplier lines (L24, L25, L26) via a further delay stage (31, 32, 33) in each case, and of a first chain circuit of adders (35, 37, 39, 41, 43) with interposed delay elements (34, 36, 38, 40, 42, 44) in each case, the outputs of the partial product stages (1, 9, 2, 10, 3, 11) being connected to the free inputs of the adders (35, 37, 39, 41, 43), in that each further section (L134) of the first multiplicand line is connected to a further, correspondingly constructed, double-bit-specific circuit (DBP2) assigned to two more significant bits of the elements of the multiplier matrix in each case, in which each further section (L134) of the first multiplicand line is connected via a delay chain (45) to the respective preceding section (L112) which simulates the delay caused by the chain circuit of the double-bit-specific circuit (DBP1) connected to the preceding section (L112), in which delay stages (49...54) are inserted into the multiplier lines (L27...L212) of each further double-bit-specific circuit (DBP2), the delay of which stages equals the sum of all the delays (45) inserted before the assigned (L134) and all preceding sections (L112) of the first multiplicand line, and in which the further chain circuit of adders (47...) belonging to each further double-bit-specific circuit (DBP2) is connected, with interposed delay elements (48...) in each case, to the output of the corresponding chain circuit of the immediately preceding double-bit-specific circuit (DBP1), in that first output-side digital signals representing the elements of the first row of the product matrix can be picked up at the output (A1) of the chain circuit of the double-bit-specific circuit assigned to the two most significant bits of the elements of the multiplier matrix, in that further multiplicand lines which have a plurality of sections and are assigned to the further rows of the multiplicand matrix in each case are provided, to the inputs (E12) of which digital signals representing the elements of the further rows of the multiplicand matrix are supplied with the aforesaid sampling rate, in that the individual sections of each further multiplicand line are connected to double-bit-specific circuits (DBP1', DBP2') constructed in the same manner as the corresponding sections of the first multiplicand line, in that in each case further output-side digital signals representing the elements of the further rows of the product matrix can be picked up at the outputs (A2) of the chain circuits of the double-bit-specific circuits which are assigned to the two most significant bits of the elements of the multiplier matrix and are connected to the last sections of the further multiplicand lines, and in that the delay stages (34, 36, 38, 40, 42, 44, 48) connected between the adders (35, 37, 39, 41, 43, 47) of the individual chain circuits and the delay stages (30, 31, 32, 33) connected upstream of the inputs of the partial product stages (9, 10, 11) have in each case a delay that corresponds to half a clock period of the digital signals supplied to the inputs of the multiplicand lines.

**Revendications**

1. Circuit pour multiplier des éléments, représentés par des signaux numériques, d'une matrice de multiplicandes avec les éléments, représentés par des signaux numériques, d'une matrice de multiplicateurs, caractérisé

en ce qu'il est prévu une première ligne de multiplicandes comportant plusieurs sections (L11...L14), à l'entrée (E11) de laquelle sont envoyés, avec une fréquence d'échantillonnage prédéterminée, des signaux numériques qui représentent les éléments de la première ligne de la matrice de multiplicandes, en ce que la première section (L11) de la première ligne de multiplicandes est reliée à un premier circuit (BP1) qui est spécifique à un bit et qui est associé aux bits de plus faible poids des éléments de la matrice de multiplicateurs, ce circuit étant constitué par un nombre de lignes de multiplicateurs (L21...L23), qui sont chargées par ces bits, nombre qui correspond au nombre des éléments d'une ligne de la matrice de multiplicateurs, augmenté du nombre, diminué de 1, de lignes de cette matrice, par des étages de produits partiels (1,2,3) qui sont associés individuellement à ces lignes de multiplicateurs (L21...L23), et dont les premières entrées sont reliées à la première section (L11) de la première ligne de multiplicandes et dont les secondes entrées sont reliées respectivement aux lignes de multiplicateurs (L21...L23), et par un premier circuit itératif d'additionneurs (4,5) comportant des circuits à retard (6...8) montés entre ceux-ci, les sorties des étages de produits partiels étant reliées aux entrées libres des additionneurs (4,5),

en ce que chaque autre section (L12) de la première ligne de multiplicandes est reliée à un autre circuit (BP2) spécifique à un bit, qui est constitué de façon correspondante, et qui est associé à un bit de poids plus élevé des éléments de la matrice de multiplicateurs, chaque autre section (L12) de la première ligne de multiplicandes étant reliée, par l'intermédiaire d'une chaîne à retard (18), à la section (L11) précédente, chaîne à retard qui simule le retard qui est déterminé par le circuit itératif du circuit (BP1) spécifique à un bit et relié à la section (L11) précédente, alors que dans les lignes de multiplicateurs (L24...L26) de chaque autre circuit (BP2) spécifique à un bit sont introduits des circuits à retard (19...21), dont le retard est égal à la somme de tous les retards (18) introduits avant la section associée et dans toutes les sections (L12,L11) précédentes de la première ligne de multiplicandes, et que les autres circuits itératifs d'additionneurs (12...14) qui appartiennent à chacun des autres circuits (BP2) spécifiques à un bit et comportant des circuits à retard (15...17) intercalaires, sont reliés à la sortie du circuit itératif correspondant du circuit (BP1) spécifique à un bit et directement précédent,

en ce qu'à la sortie (A1) du circuit itératif du circuit (BP4) spécifique à un bit et associé aux bits de poids le plus élevé des éléments de la matrice de multiplicateurs, sont susceptibles d'être prélevés des premiers signaux numériques côté sortie, qui représentent les éléments de la première ligne de la matrice de produit,

en ce qu'il est prévu d'autres lignes de multiplicandes associées aux autres lignes de la matrice de multiplicandes et comportant plusieurs sections, et aux entrées (E12) desquelles sont envoyés, avec ladite fréquence d'échantillonnage, des signaux numériques qui représentent les éléments des autres lignes de la matrice de multiplicandes,

en ce que chacune des sections de chacune des autres lignes de multiplicandes sont reliées à des circuits (BP1'...BP4'...) spécifiques à un bit et formés de la même manière que les sections correspondantes (L11...L14) de la première ligne de multiplicandes,

en ce qu'aux sorties (A2) des circuits itératifs des circuits (BP4') qui sont spécifiques à un bit, qui sont associés aux bits de poids le plus élevé des éléments de la matrice de multiplicateurs et qui sont reliés aux dernières sections des autres lignes de multiplicandes, sont susceptibles d'être prélevés d'autres signaux numériques côté sortie, qui représentent les éléments des autres lignes de la matrice de produit, et

en ce que les circuits à retard (6,7,8,15,16,17), qui sont montés entre les additionneurs (4,5,12,13,14) de chacun des circuits itératifs, présentent des retards qui correspondent à une période de cadence des signaux numériques envoyés aux entrées (E11,E12) des lignes multiplicandes.

2. Circuit pour multiplier des éléments, représentés par des signaux numériques, d'une matrice de multiplicandes avec les éléments, représentés par des signaux numériques, d'une matrice de multiplicateurs, caractérisé

en ce qu'il est prévu une première ligne de multiplicandes comportant plusieurs sections (L112...L134), à l'entrée (E11) de laquelle sont envoyés, avec une fréquence d'échantillonnage prédéterminée, des signaux numériques qui représentent les éléments de la première ligne de la matrice de multiplicandes,

en ce que la première section (L112) de la première ligne de multiplicandes est reliée à un premier circuit (DBP1) qui est spécifique à deux bits et qui est associé aux bits de plus faible poids et de deuxième plus faible poids de l'élément de la matrice de multiplicateurs, ce circuit étant constitué par un nombre de lignes de multiplicateurs (L21...L26), qui sont chargées par ces bits de plus faible poids et de deuxième plus faible poids, nombre qui correspond au nombre double d'éléments d'une ligne de la matrice de multiplicateurs, augmenté du nombre, diminué de 2, de lignes de cette matrice, par des étages de produits partiels (1,9,2,10,3,11) associés individuellement à ces lignes de multiplicateurs (L21...L26), les premières entrées des étages de produits partiels (1,2,3), qui sont associés aux bits de plus faible poids, étant reliées directement à la première section (L112) de la première ligne de multiplicandes et les secondes entrées de ces étages étant reliées directement aux lignes de multiplicateurs (L21,L22,L23), et, en outre, les premières entrées des étages de produits partiels (9,10,11) qui sont associés aux bits de deuxième plus faible poids, étant reliées, par l'intermédiaire d'un étage à retard (30), à la première section (L112) de la première ligne de multiplicandes, et les secondes entrées de ces étages cités en dernier lieu étant reliées, respectivement par l'intermédiaire d'un autre étage à retard (31,32,33), aux lignes de multiplicandes (L24,L25,L26) associées, et par un premier circuit itératif d'additionneurs (35,37,39,41,43) comportant des circuits à retard (34,36,38,40,42,44) montés entre ceux-ci, les sorties des étages de produits partiels (1,9,2,10,3,11) étant reliées aux entrées libres des additionneurs (35,37,39,41,43),

en ce que chaque autre section (L134) de la première ligne de multiplicandes est reliée à un autre circuit (DBP2) spécifique à deux bits, qui est constitué de façon correspondante et qui est associée à deux bits de poids plus élevé des éléments de la matrice de multiplicateurs, chaque autre section (L134) de la première ligne de multiplicandes étant reliée, par l'intermédiaire d'une chaîne à retard (45), à la section (L112) précédente, chaîne à retard qui simule le retard qui est déterminé par le circuit itératif du circuit (DBP1) spécifique à deux bits et relié à la section (L112) précédente, alors que dans les lignes de multiplicateurs (L27...L12) de chaque autre circuit (DBP2) spécifique à deux bits sont introduits des circuits à retard (49...54), dont le retard est égal à la somme de tous les retards (45) introduits avant la section (L134) associée et dans toutes les sections (L12,L11) précédentes de la première ligne multiplicande, et que les autres circuits itératifs d'additionneurs (47...) appartenant à chacun des autres circuits (DBP2) spécifiques à deux bits et comportant des circuits à retard (48...) intercalaires, sont reliés à la sortie du circuit itératif correspondant du circuit (DBP1) spécifique à deux bits directement précédent,

en ce qu'à la sortie (A1) du circuit itératif du circuit spécifique à deux bits et associé aux bits de poids le plus élevé des éléments de la matrice de multiplicateurs, sont susceptibles d'être prélevés des premiers signaux numériques côté sortie, qui représentent les éléments de la première ligne de la matrice de produit,

en ce qu'il est prévu d'autres lignes de multiplicandes associées aux autres lignes de la matrice de multiplicandes et comportant plusieurs sections, et aux entrées (E12) desquelles sont envoyés, avec ladite fréquence d'échantillonnage, des signaux numériques qui représentent les éléments des autres lignes de la matrice de multiplicandes,

en ce que chacune des sections de chacune des autres lignes de multiplicandes sont reliées aux circuits (DBP1',DBP2') spécifiques à deux bits et formés de la même manière que les sections correspondantes de la première ligne de multiplicandes,

en ce qu'aux sorties (A2) des circuits itératifs des circuits (BP4') qui sont spécifiques à deux bits, qui sont associés aux deux bits de poids le plus élevé des éléments de la matrice de multiplicateurs et qui sont reliés aux dernières sections des autres lignes de multiplicandes, sont susceptibles d'être prélevés respectivement d'autres signaux numériques côté sortie, qui représentent les éléments des autres lignes de la matrice de produit, et

en ce que les circuits à retard (34,36,38,40,42,44,48), qui sont montés entre les additionneurs (35,37,39,41,43,47...) de chacun des circuits itératifs et les circuits à retard (30,31,32,33) montés en amont des entrées des étages de produits partiels (9,10,11), présentent un retard qui correspond à une demi période de cadence des signaux numériques envoyés aux entrées des lignes de multiplicandes.

FIG 1

# FIG 2

EP 0 305 709 B1